# EUROPEAN PATENT APPLICATION

(11) **EP 4 697 447 A2**
(43) Date of publication of application: **18.02.2026**
(21) Application number: 25189903.5
(22) Date of filing: 16.07.2025
(51) Int. Cl.: H01M 10/54, H01M 50/107, H01M 50/56

(54) **METHOD FOR DISASSEMBLING POWER STORAGE DEVICE**

(30) Priority: 26.07.2024 JP 2024121187
(71) Applicant: Prime Planet Energy & Solutions, Inc., Chuo-ku, Tokyo 103-0022 (JP)
(72) Inventor: UCHIDA, Yozo, Tokyo, 103-0022 (JP); HASHIMOTO, Kazuhiko, Koriyama-shi, 963-0725 (JP)
(74) Representative: Kuhnen & Wacker Patent- und Rechtsanwaltsbüro PartG mbB

(57) **Abstract**

A method for disassembling a power storage device (10) includes: preparing a power storage device (10) in which a positive electrode (30) and a negative electrode (40) are housed in a case (20), the negative electrode (40) is electrically connected to the case (20), and the positive electrode (30) is insulated from the case (20); separating a portion of the case (20) where the case (20) is electrically connected to the negative electrode (40), from the case (20); and cutting another portion of the case (20) after the separating.

## Description

The present disclosure relates to a method for disassembling a power storage device.

### BACKGROUND

Japanese Patent Application Publication No. 2021-073375, for example, discloses a recycling method for collecting usable materials from used lithium ion batteries. The method for recycling lithium ion batteries disclosed in Japanese Patent Application Publication No. 2021-073375 includes the steps of: discharging the lithium ion batteries; chopping the lithium ion batteries into pieces; immersing the pieces of the chopped lithium ion batteries into a polar solvent to form a heterogeneous mixture; processing the heterogeneous mixture with mechanical agitation to dissolve a binder material in a cathode layer and an anode layer; screening the processed heterogeneous mixture to obtain a suspension including the polar solvent and finer electrode materials; and isolating the finer electrode materials in the suspension from the polar solvent.

Japanese Patent Application Publication No. 2021-073375 shows that through the step of chopping the lithium ion batteries into pieces, a mixture of a structural part, a conductive metal part coated with the cathode layer, and a conductive metal part coated with the anode layer is obtained. In the step of chopping the lithium ion batteries into pieces in Japanese Patent Application Publication No. 2021-073375, the electrode body is not separated from the structural part such as a case. However, to enhance recycling efficiency of resources, the electrode body is preferably separated from the case. When the case is cut in order to take the electrode body out of the case, in a power storage device in which a negative electrode is electrically connected to the case and the case itself serves as a negative electrode, a positive electrode and the negative electrode might be short-circuited via a cutting tool to cause heat generation of the power storage device.

### SUMMARY

A method for disassembling a power storage device in which a negative electrode is electrically connected to a case while suppressing heat generation due to a short circuit in cutting the case will be herein proposed.

A method for disassembling a power storage device proposed here includes: preparing a power storage device in which a positive electrode and a negative electrode are housed in a case, the negative electrode is electrically connected to the case, and the positive electrode is insulated from the case; separating a portion of the case where the case is electrically connected to the negative electrode, from the case; and cutting another portion of the case after the separating.

In the method for disassembling a power storage device described above, in cutting the case, a portion of the case electrically connected to the negative electrode is separated from the case. Accordingly, in cutting another portion of the case, even if the positive electrode and the negative electrode are short-circuited via a cutting tool, the short circuit can be made local. This suppresses heat generation of the power storage device due to the short circuit.

### BRIEF DESCRIPTION OF THE DRAWINGS

FIG. 1 is a longitudinal cross-sectional view of a power storage device according to one preferred embodiment.
FIG. 2 is a schematic view illustrating a configuration of a power storage device disassembling apparatus.
FIG. 3 is a flowchart showing disassembly of the power storage device.
FIG. 4 is a longitudinal cross-sectional view of the power storage device while a negative electrode tab is being cut.
FIG. 5 is a longitudinal cross-sectional view of the power storage device while an end portion on the side of the negative electrode is being cut.

### DETAILED DESCRIPTION

One preferred embodiment of a power storage device disassembling apparatus will be hereinafter described. The preferred embodiment described here is, of course, not intended to particularly limit the present disclosure. Each drawing is a schematic view and does not necessarily strictly reflect an actual product. Members and portions having the same functions are denoted by the same reference characters, and description for the same elements and features will not be repeated or will be simplified as appropriate. Hereinafter, in the drawings, the upper side is denoted by U, and the lower side is denoted by D. It should be noted that the upper side and the lower side are merely directions for convenience of description, and do not limit an installation mode or the like of the power storage device disassembling apparatus.

The term "power storage device" herein refers to a general device from which electric energy can be extracted, and is a concept including a primary battery and a secondary battery as well as a chemical battery such as a lithium ion secondary battery or a nickel-metal hydride battery and a physical battery such as an electric double layer capacitor.

### [Configuration of Power Storage Device]

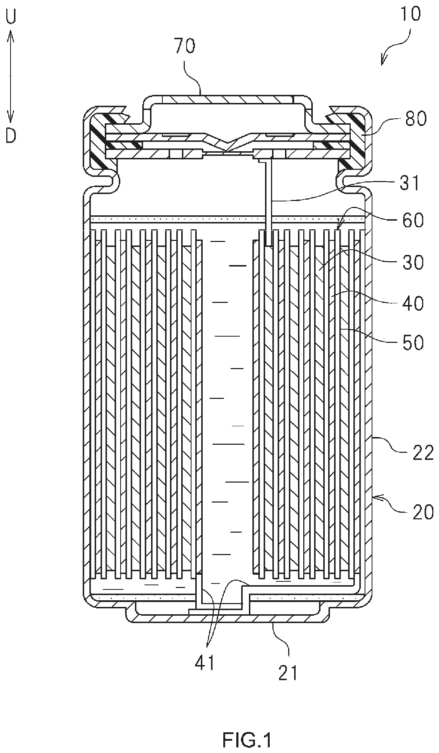

FIG. 1 is a longitudinal cross-sectional view of a power storage device 10 according to one preferred embodiment. As illustrated in FIG. 1, the power storage device 10 includes a battery case 20, a positive electrode sheet 30, a negative electrode sheet 40, separator sheets 50, a positive electrode terminal 70, and an insulating member 80. The positive electrode sheet 30, the negative electrode sheet 40, and the separator sheets 50 are wound in a stacked state to form an electrode body 60.

Although a plan view is not shown, the power storage device 10 according to this preferred embodiment is a cylindrical battery in which the positive electrode sheet 30 and the negative electrode sheet 40 wound with the separator sheets 50 interposed therebetween are housed in the battery case 20 having a cylindrical shape. In the power storage device 10 according to this preferred embodiment, the negative electrode sheet 40 is electrically connected to the battery case 20. The battery case 20 has the same potential as the negative electrode sheet 40. The positive electrode sheet 30 is insulated from the battery case 20. The positive electrode sheet 30 is connected to the positive electrode terminal 70 insulated from the battery case 20 by the insulating member 80. The battery case 20 has a negative electrode terminal 21.

The positive electrode sheet 30 is a member in which a positive electrode active material layer including a positive electrode active material is formed on each surface of a metal foil having a predetermined width and a predetermined thickness. The metal foil and the positive electrode active material are not particularly limited. The positive electrode sheet 30 includes a positive electrode tab 31 connected to the positive electrode terminal 70.

The negative electrode sheet 40 is a member in which a negative electrode active material layer including a negative electrode active material is formed on each surface of a metal foil having a predetermined width and a predetermined thickness. The metal foil and the negative electrode active material are not particularly limited. The negative electrode sheet 40 includes a negative electrode tab 41 connected to the battery case 20.

Each of the separator sheets 50 is, for example, a porous resin sheet which has a required heat resistance and through which an electrolyte can pass. The material for the separator sheet 50 is not particularly limited, either. The separator sheets 50 are sandwiched between the positive electrode sheet 30 and the negative electrode sheet 40, and insulates the positive electrode sheet 30 and the negative electrode sheet 40 from each other. A stack of the positive electrode sheet 30, the separator sheets 50, and the negative electrode sheet 40 are wound to form an electrode body 60.

The negative electrode sheet 40 is connected to a radially center portion of an end of the battery case 20. Specifically, the negative electrode tab 41 is connected to the battery case 20. The end of the battery case 20 to which the negative electrode sheet 40 is connected is a lower end when the power storage device 10 is disassembled in this preferred embodiment. The end of the battery case 20 to which the negative electrode sheet 40 is connected will be hereinafter also referred to as a lower end. The end of the battery case 20 to which the negative electrode sheet 40 is connected is not necessarily the lower end when the power storage device 10 is disassembled, and may be an upper end or a left or right end, for example. The negative electrode terminal 21 is formed at the lower end of the battery case 20. The negative electrode terminal 21 is formed on a radially center portion of the lower end of the battery case 20, and projects downward from a peripheral portion thereof.

The positive electrode terminal 70 is located at the other end of the battery case 20. The end of the battery case 20 at which the positive electrode terminal 70 is located is an upper end when the power storage device 10 is disassembled in this preferred embodiment. The end of the battery case 20 at which the positive electrode terminal 70 is located will be hereinafter also referred to as an upper end. The positive electrode tab 31 is connected to the positive electrode terminal 70.

The insulating member 80 insulates the positive electrode terminal 70 and the battery case 20 from each other. The insulating member 80 is made of, for example, a resin. The insulating member 80 has a ring shape in this preferred embodiment. The insulating member 80 is located on the inner side of a cylindrical portion 22 of the battery case 20. An outer peripheral surface of the insulating member 80 is in contact with an inner peripheral surface of the battery case 20. The positive electrode terminal 70 is held by an inner peripheral surface of the ring of the insulating member 80. The insulating member 80 is not limited to such a three-dimensional ring shape, and may have, for example, an annular flat-plate shape in a plan view.

### [Configuration of Disassembling Apparatus]

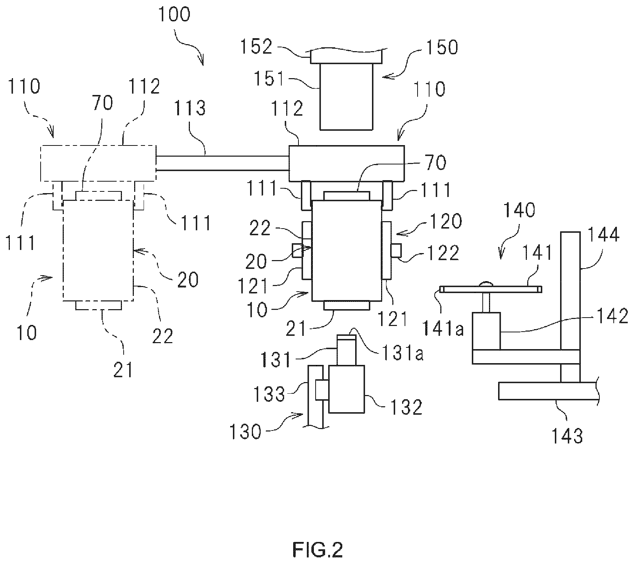

FIG. 2 is a schematic view illustrating a configuration of a power storage device disassembling apparatus 100 (hereinafter also referred to simply as a disassembling apparatus 100). As illustrated in FIG. 2, the disassembling apparatus 100 includes a conveyance device 110, a clamp device 120, a milling device 130, a cutting device 140, and a pushing device 150. The power storage device 10 is supplied to the disassembling apparatus 100 such that the end of the power storage device 100 at which the positive electrode terminal 70 is located faces upward.

The conveyance device 110 grips the power storage device 10 as a disassembly target and conveys the power storage device 10 to the clamp device 120. The power storage device 10 is disassembled while being gripped by the clamp device 120. The conveyance device 110 includes a clamp 111 that grips the upper end of the power storage device 10, a driving device 112 that opens and closes the clamp 111, and a transfer device 113 that transfers the clamp 111 horizontally. The clamp 111 is made of an insulator to prevent energization even when the clamp 111 contacts the positive electrode terminal 70. The clamp 111 is made of, for example, an insulator resin.

The clamp device 120 is located in a destination to which the conveyance device 110 conveys the power storage device 10. The clamp device 120 is located below the clamp 111 of the conveyance device 110, and grips an outer peripheral surface of the cylindrical portion 22 of the battery case 20. The clamp device 120 includes a clamp 121 that grips an outer peripheral surface of the battery case 20, and a driving device 122 that opens and closes the clamp 121.

The milling device 130 mills an end portion (lower end in this preferred embodiment) of the power storage device 10 at which the negative electrode terminal 21 is located. Specifically, the milling device 130 mills a radially center portion of the lower end of the battery case 10 to which the negative electrode tab 41 of the negative electrode sheet 40 (see FIG. 1) is connected. Accordingly, the milling device 130 cuts off a portion of the battery case 20 where the battery case 20 is electrically connected to the negative electrode sheet 40, from the battery case 20. In this preferred embodiment, the milling device 130 mills the center portion of the negative electrode terminal 21 and the negative electrode tab 41. Consequently, electrical connection between the battery case 20 and the negative electrode sheet 40 is disconnected.

As illustrated in FIG. 2, the milling device 130 includes an end mill 131, a rotational driving device 132, and an elevation device 133. The end mill 131 is a rod-shaped cutting tool that cuts a radially center portion of the lower end of the battery case 20. The end mill 131 extends along the axis of the battery case 20. The end mill 131 is made of a metal, for example, a sintered hard alloy. The upper end of the end mill 131 has a blade portion 131a capable of performing plane cutting. The end mill 131 is located below the clamp 121 of the clamp device 120. The power storage device 10 gripped by the clamp 121 is located above the end mill 131. The rotational driving device 132 grips the end mill 131 and rotates the end mill 131 about the axis. The elevation device 133 moves the rotational driving device 132 gripping the end mill 131 upward and downward. Accordingly, the end mill 131 moves toward or away from the power storage device 10.

The cutting device 140 cuts a lower end portion and an upper end portion of the power storage device 10 substantially horizontally. As illustrated in FIG. 2, the cutting device 140 includes a disc cutter 141, a rotational driving device 142, a horizontal transfer device 143, and an elevation device 144. The disc cutter 141 is a cutting tool having a circular flat-plate shape in a plan view. The outer peripheral surface of the disc cutter 141 has a blade portion 141a. The disc cutter 141 is made of a metal (e.g., high-speed steel) or a metal on which diamond powder is electrodeposited. The rotational driving device 142 rotates the disc cutter 141 about the axis extending in the up-down direction. The horizontal transfer device 143 moves the rotational driving device 142 holding the disc cutter 141 substantially horizontally. Accordingly, the disc cutter 141 move toward or away from the power storage device 10. The elevation device 144 moves the rotational driving device 142 holding the disc cutter 141 upward and downward. The elevation device 144 can change the position at which the disc cutter 141 cuts the power storage device 10.

The pushing device 150 pushes the electrode body 60 (the stack of the positive electrode sheet 30, the separator sheets 50, and the negative electrode sheet 40) from the battery case 20 whose top and bottom end portions are cut. The pushing device 150 includes a resin push rod 151 and a push device 152 that moves the push rod 151 upward and downward. The push rod 151 is located above the clamp 121. When the push rod 151 is pushed downward by the push device 152, the lower end of the push rod 151 pushes the electrode body 60 downward. Accordingly, the electrode body 60 comes out of the battery case 20 and falls downward. The electrode body 60 is separated from the battery case 20 by the pushing device 150.

### [Disassembly Process of Power Storage Device]

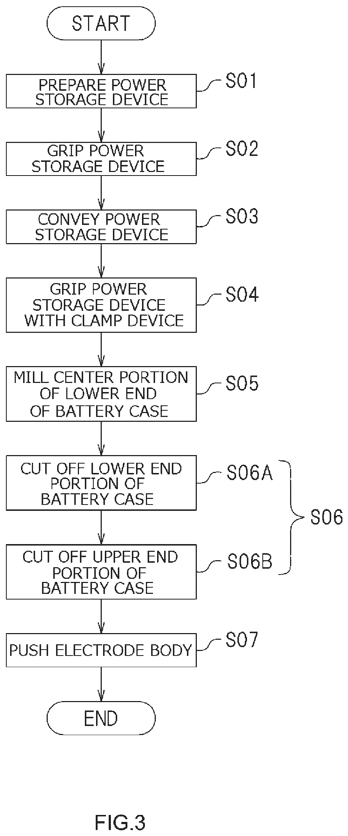

A process of disassembling the power storage device 10 by the disassembling apparatus 100 will be hereinafter described. FIG. 3 is a flowchart showing disassembly of the power storage device 10. As shown in FIG. 3, in a preparation step S01 in disassembly of the power storage device 10, the power storage device 10 is prepared. The power storage device 10 is a power storage device in which the positive electrode sheet 30 and the negative electrode sheet 40 are housed in the battery case 20, the negative electrode sheet 40 is electrically connected to the battery case 20, and the positive electrode sheet 30 is insulated from the battery case 20. In this preferred embodiment, the power storage device 10 is a cylindrical battery in which the positive electrode sheet 30 and the negative electrode sheet 40 wound with the separator sheets 50 interposed therebetween are housed in the battery case 20 having a cylindrical shape.

In a gripping step of step S02, the clamp 111 of the conveyance device 110 grips an upper end portion of the power storage device 10. In a conveyance step of step S03, the clamp 111 gripping the power storage device 10 is conveyed horizontally and moved to a position above the end mill 131. In a holding step of step S04, the power storage device 10 is re-clamped between the clamp 111 of the conveyance device 110 and the clamp 121 of the clamp device 120. Specifically, in step S04, the clamp 121 of the clamp device 120 grips a center portion of the cylindrical portion 22, and the clamp 111 of the conveyance device 110 releases the power storage device 10.

In a subsequent separation step of step S05, a portion where the battery case 20 and the negative electrode sheet 40 are electrically connected to each other (the negative electrode tab 41 in this preferred embodiment) is separated from the battery case 20. More specifically, in step S05, the rod-shaped end mill 131 extending along the axis of the battery case 20 mills a radially center portion of a lower end (an end portion at which the negative electrode terminal 21 is located) of the battery case 20. In this preferred embodiment, the negative electrode sheet 40 is connected to the radially center portion of the lower end of the battery case 20. Accordingly, in step S05, electrical connection between the negative electrode sheet 40 and the battery case 20 is disconnected.

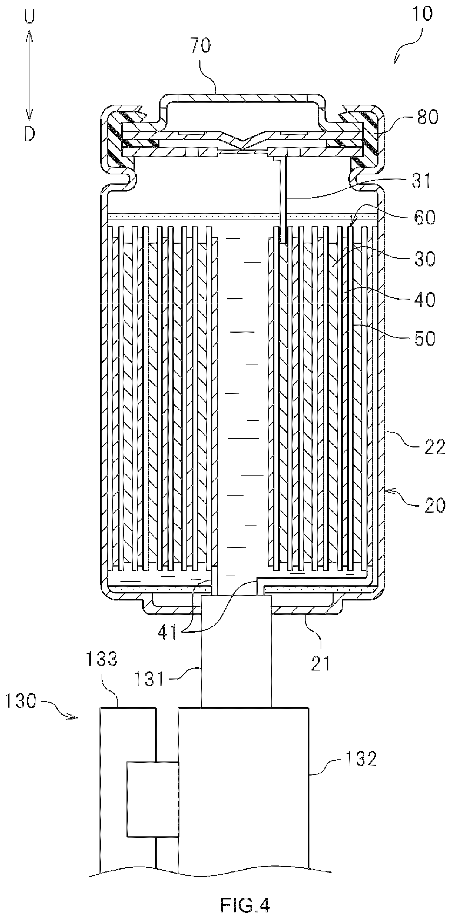

FIG. 4 is a longitudinal cross-sectional view of the power storage device 10 while the negative electrode tab 41 is being cut. As illustrated in FIG. 4, in step S05 (see FIG. 3), the end mill 131 is rotated by the rotational driving device 132, and is elevated by the elevation device 133 to a position at which the negative electrode tab 41 is cut. The end mill 131 is elevated to a position in the up-down direction at which the end mill 131 does not contact a wound portion of the electrode body 60, that is, a predetermined position below the wound portion of the electrode body 60 in this preferred embodiment. Accordingly, the positive electrode sheet 30 and the negative electrode sheet 40 are not short-circuited via the end mill 131. Even if the positive electrode sheet 30 and the negative electrode sheet 40 are short-circuited via the end mill 131, this short circuit is local, and thus, only a small current flows. Accordingly, the amount of heat generated by the short circuit is small. After cutting of the negative electrode tab 41 and other portions, the end mill 131 is moved downward to be separated from the battery case 20.

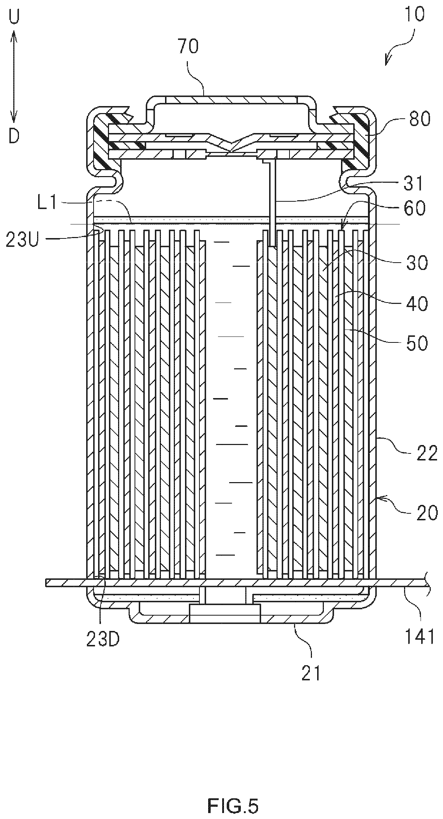

In a cutting step of step S06, the cutting device 140 cuts another portion of the battery case 20. Since connection between the battery case 20 and the negative electrode sheet 40 is disconnected in step S05, even if the disc cutter 141 of the cutting device 140 contacts the battery case 20 and the positive electrode sheet 30, the positive electrode sheet 30 and the negative electrode sheet 40 are not short-circuited. Specifically, in step S06, an upper end portion and a lower end portion of the battery case 20 are cut. Step S06 includes step S06A of cutting the lower end portion of the battery case 20 and the step S06B of cutting the upper end portion of the battery case 20. In the cutting step S06, end portions, that is, both end portions in this preferred embodiment, of the battery case 20 are cut off to form openings (a pair of openings 23U and 23D in this preferred embodiment, see FIG. 5).

FIG. 5 is a longitudinal cross-sectional view of the power storage device 10 while an end portion on the side of the negative electrode is being cut. As illustrated in FIG. 5, in step S06A of cutting the lower end of the battery case 20 (see FIG. 3), the disc cutter 141 is placed between the lower end of the battery case 20 and the electrode body 60 in the up-down direction. In this state, the disc cutter 141 is moved substantially horizontally to cut off a lower end portion of the battery case 20.

At this time, the disc cutter 141 preferably does not contact the electrode body 60. However, since a space between the electrode body 60 and the battery case 20 is a dead space, and can be set to be very narrow in some cases. Accordingly, the disc cutter 141 might contact the electrode body 60. When the disc cutter 141 contacts the electrode body 60, the positive electrode sheet 30 and the negative electrode sheet 40 can be locally short-circuited in some cases. However, since the short circuit between the positive electrode sheet 30 and the negative electrode sheet 40 is local, heat generation due to the short circuit is small.

In a case where the negative electrode tab 41 is not cut and the negative electrode sheet 40 and the battery case 20 are electrically connected to each other, when the disc cutter 141 contacts the battery case 20 and the positive electrode sheet 30, the positive electrode sheet 30 and the negative electrode sheet 40 can be short-circuited in a large scale via the disc cutter 141 and the battery case 20 in some cases. In such cases, the short circuit causes a large amount of heat.

In step S06B of cutting the upper end of the battery case 20, the disc cutter 141 is moved to a position between the upper end of the battery case 20 and the electrode body 60 in the up-down direction. In this state, the disc cutter 141 is moved substantially horizontally to cut off an upper end portion of the battery case 20. In FIG. 5, a cutting line in cutting the upper end portion of the battery case 20 is indicated by character L1. The possibility of a local short circuit between the positive electrode sheet 30 and the negative electrode sheet 40 is similar to the possibility in step S06A. Also in this case, the amount of heat generation due to a short circuit is small.

As shown in FIG. 3, in a take-out step of step S07, the electrode body 60 is taken out from the opening 23D formed in the cutting step S06. In step S07, the push rod 151 of the pushing device 150 is inserted into the battery case 20 from the upper opening 23U. The electrode body 60 is pushed downward by the push rod 151. Consequently, the electrode body 60 comes out of the battery case 20 through the lower opening 23D. In this manner, the electrode body 60 is separated from the battery case 20. The separated electrode body 60 is refined, and materials such as a rare earth constituting the electrode body 60 are collected.

### [Advantages of Preferred Embodiment]

The following description is directed to advantages obtained by the method for disassembling the power storage device 10 according to this preferred embodiment.

In the method for disassembling the power storage device 10 according to this preferred embodiment includes: a preparation step S01 of preparing a power storage device 10 in which a positive electrode sheet 30 and a negative electrode sheet 40 are housed in a battery case 20, the negative electrode sheet 40 is electrically connected to the battery case 20, and the positive electrode sheet 30 is insulated from the battery case 20; a separation step S05 of separating a portion of the battery case 20 where the battery case 20 is electrically connected to the negative electrode sheet 40, from the battery case 20; and a cutting step S06 of cutting another portion of the battery case 20 after the separation step S05.

With the method for disassembling the power storage device 10, the power storage device 10 is not crushed unlike disclosed in the method of Japanese Patent Application Publication No. 2021-073375, but the battery case 20 is cut. Thus, the electrode body 60 can be taken out in a state where the electrode body 60 is less mixed with the battery case 20 and is less broken. Accordingly, resources, such as a rare earth, included in the electrode body 60 can be efficiently collected.

In addition, the method for disassembling the power storage device 10 according to this preferred embodiment can prevent a large-scale short circuit of the power storage device 10 at the cutting step S06 of cutting the power storage device 10. In the method for disassembling the power storage device 10 according to this preferred embodiment, in the separation step S05, the portion (the negative electrode tab 41 in this preferred embodiment) where the battery case 20 is electrically connected to the negative electrode sheet 40 is separated from the battery case 20. Accordingly, even if the positive electrode sheet 30 and the negative electrode sheet 40 are short-circuited by the cutting tool (the disc cutter 141 in this preferred embodiment) in the cutting step S06, the short-circuit can be made local. Accordingly, a large-scale short circuit of the power storage device 10 is prevented, and heat generation due to a short circuit can be reduced.

In this preferred embodiment, the positive electrode sheet 30 and the negative electrode sheet 40 are wound with the separator sheets 50 interposed therebetween. In the cutting step S06, an end portion of the battery case 20 is cut off to thereby form an opening 23D. The method for disassembling the power storage device 10 further includes a take-out step S07 of taking out the positive electrode sheet 30 and the negative electrode sheet 40 from the opening 23D formed in the cutting step S06. With this method, the opening 23D can be safely formed in the cutting step S06, and the positive electrode sheet 30 and the negative electrode sheet 40 can be taken out from the opening 23D.

In this preferred embodiment, the power storage device 10 is a cylindrical battery in which the positive electrode sheet 30 and the negative electrode sheet 40 wound with the separator sheets 50 interposed therebetween are housed in the battery case 20 having a cylindrical shape. In many cylindrical batteries, negative electrodes are connected to battery cases, and the technique of this preferred embodiment is especially suitably applicable to cylindrical batteries.

In this preferred embodiment, the negative electrode sheet 40 is connected to a radially center portion of an end of the battery case 20. In the separation step S05, the radially center portion of the end of the battery case 20 is cut with a rod-shaped end mill 131 extending along an axis of the battery case 20. With this method, it is possible to easily separate a connection portion between the battery case 20 and the negative electrode sheet 40 (the negative electrode tab 41 in this preferred embodiment) from the battery case 20, while preventing the end mill 131 from contacting the positive electrode sheet 30.

### [Other Preferred Embodiments]

One preferred embodiment of a method for disassembling a power storage device proposed here has been described above. The preferred embodiment described above, however, is merely an example, and the present disclosure can be carried out in other modes.

For example, the configuration of the power storage device 10 is not particularly limited. For example, the power storage device 10 is not limited to the cylindrical power storage device, and may be, for example, a square power storage device. The electrode body 60 is not limited to the wound electrode body formed by winding the positive electrode sheet 30 and the negative electrode sheet 40 stacked with the separator sheets 50 interposed therebetween. The electrode body 60 may be a laminated electrode body including a plurality of positive electrode sheets 30 and a plurality of negative electrode sheets 40 laminated with separator sheets 50 interposed therebetween.

The preferred embodiment described above does not limit to the present disclosure unless otherwise specified. The technique disclosed here can be modified in various ways. Each component and each process mentioned here may be omitted as appropriate or combined as appropriate as long as no particular problems occur. The specification includes the disclosures described in the following items.

### Item 1:

A method for disassembling a power storage device, the method comprising:
preparing a power storage device in which a positive electrode and a negative electrode are housed in a case, the negative electrode is electrically connected to the case, and the positive electrode is insulated from the case;
separating a portion of the case where the case is electrically connected to the negative electrode, from the case; and
cutting another portion of the case after the separating.

### Item 2:

The method for disassembling a power storage device according to Item 1, wherein
the positive electrode and the negative electrode are wound or stacked with a separator interposed therebetween,
in the cutting, an end portion of the case is cut to thereby form an opening, and
the method further comprises taking out the positive electrode and the negative electrode from the opening formed in the cutting.

### Item 3:

The method for disassembling a power storage device according to Item 1 or 2, wherein
the power storage device is a cylindrical battery in which the positive electrode and the negative electrode wound with separators interposed therebetween are housed in the case having a cylindrical shape.

### Item 4:

The method for disassembling a power storage device according to Item 3, wherein
the negative electrode is connected to a radially center portion of an end of the case, and
in the separating, the radially center portion of the end of the case is cut with a rod-shaped cutting tool extending along an axis of the case.

## Claims

1. A method for disassembling a power storage device (10), the method comprising:
preparing a power storage device (10) in which a positive electrode (30) and a negative electrode (40) are housed in a case (20), the negative electrode (40) is electrically connected to the case (20), and the positive electrode (30) is insulated from the case (20);
separating a portion of the case (20) where the case (20) is electrically connected to the negative electrode (40), from the case (20); and
cutting another portion of the case (20) after the separating.

2. The method for disassembling a power storage device (10) according to claim 1, wherein
the positive electrode (30) and the negative electrode (40) are wound or stacked with a separator (50) interposed therebetween,
in the cutting, an end portion of the case (20) is cut to thereby form an opening (23D), and
the method further comprises taking out the positive electrode (30) and the negative electrode (40) from the opening (23D) formed in the cutting.

3. The method for disassembling a power storage device (10) according to claim 1 or 2, wherein
the power storage device (10) is a cylindrical battery in which the positive electrode (30) and the negative electrode (40) wound with separators (50) interposed therebetween are housed in the case (20) having a cylindrical shape.

4. The method for disassembling a power storage device (10) according to claim 3, wherein
the negative electrode (30) is connected to a radially center portion of an end of the case (20), and
in the separating, the radially center portion of the end of the case (20) is cut with a rod-shaped cutting tool (131) extending along an axis of the case (20).
